# EUROPEAN PATENT APPLICATION

(11) **EP 3 961 156 A1**
(43) Date of publication of application: **02.03.2022**
(21) Application number: 21177097.9
(22) Date of filing: 01.06.2021
(51) Int. Cl.: G01C 21/30, G01C 21/36, G01S 5/16, G06T 7/73, G05D 1/02

(54) **POSITION AND ORIENTATION CALCULATION METHOD, POSITION AND ORIENTATION CALCULATION PROGRAM, AND INFORMATION PROCESSING APPARATUS**

(30) Priority: 28.08.2020 JP 2020144087
(71) Applicant: FUJITSU LIMITED, Kanagawa 211-8588 (JP)
(72) Inventor: Kitaura, Asako, Kawasaki-shi, Kanagawa, 211-8588 (JP); Fujita, Takushi, Kawasaki-shi, Kanagawa, 211-8588 (JP)
(74) Representative: Hoffmann Eitle

(57) **Abstract**

A position and orientation calculation method incudes comparing a first image feature of first image information included in a plurality of environment maps with a second image feature of second image information acquired from a moving object or an imaging apparatus of the moving object, and specifying a calculation environment map to be used for calculating a position and orientation of the moving object or the imaging apparatus of the moving object, among the plurality of environment maps, based on a result of the comparison.

## Description

### [Technical Field]

The embodiments discussed herein are related to a position and orientation calculation method, a position and orientation calculation program and an information processing apparatus of calculating an imaging position and an orientation of an image.

### [Background Art]

In the related art, there is a technology called simultaneous localization and mapping (SLAM) that uses data related to surrounding conditions acquired while a moving object is moving as an input and simultaneously creates a traveling route of the moving object and a surrounding environment map. In addition, among the SLAM technologies, a technology for using, as an input, an moving image such as a video captured by a moving object to estimate a position and an orientation of a camera during traveling of the moving object is referred to as Visual-SLAM (hereinafter referred to as "V-SLAM").

The V-SLAM is a technology that may estimate and create a traveling route of an own vehicle (a position and an orientation of own vehicle) and a surrounding environment map (a three-dimensional position map of an image feature point group of surrounding subjects, hereinafter referred to as "3D environment map") by using a moving image captured by an in-vehicle camera as an input and using changes in a subject in the captured moving image. An own vehicle position and orientation may be calculated and estimated from the moving image.

In recent years, with the spread of connected cars and the like, a service has been studied in which a vehicle is used as a sensor for grasping surrounding feature conditions by collecting and analyzing data (videos) of in-vehicle devices and drive recorders of a moving object such as a vehicle at a center. For example, there are an event occurrence detection service for specifying and using a location of a falling object, a map change detection service for grasping an installation position change of a feature for map update, and the like.

As a related art, there is a technology for performing position and orientation estimation with high accuracy by using the V-SLAM.

### [Citation List]

### [Patent Literature]

[PTL 1] Japanese Laid-open Patent Publication No. 2020-67439

### [Summary of Invention]

### [Technical Problem]

Meanwhile, in order to realize these services while quickly responding to surrounding changes, it is desirable to estimate an own vehicle position and orientation at a time of acquiring in-vehicle data, that is, a position and orientation of a camera which captures an in-vehicle image or an imaging position and orientation of a video in an actual coordinate system at high speed and with high accuracy as possible.

In one aspect, an object of the present disclosure is to obtain an imaging position and orientation at high speed and with high accuracy.

### [Solution to Problem]

In one embodiment, there is provided a position and orientation calculation method in which an information processing apparatus compares an image feature of image information included in a plurality of environment maps with an image feature of image information acquired from a moving object or an imaging apparatus of the moving object; and specifies a calculation environment map to be used for calculating a position and orientation of the moving object or the imaging apparatus of the moving object among the plurality of environment maps, based on a result of the comparison.

### [Effects of Invention]

According to an aspect of the present disclosure, an imaging position and orientation may be obtained at high speed and with high accuracy.

### [Brief Description of Drawings]

FIG. 1 is an explanatory diagram illustrating an example of an overview of a position and orientation calculation method and a position and orientation calculation program according to the present embodiment;
FIG. 2 is an explanatory diagram illustrating an example of a system configuration for implementing the position and orientation calculation method according to Embodiment 1;
FIG. 3 is a block diagram illustrating an example of a hardware configuration of a server;
FIG. 4 is a block diagram illustrating an example of a hardware configuration of an in-vehicle device;
FIG. 5 is an explanatory diagram illustrating an example of a configuration of a 3D environment map according to Embodiment 1;
FIG. 6 is a flowchart illustrating an example of processing of an environment map creation unit and a map registration unit according to Embodiment 1;
FIG. 7 is an explanatory diagram illustrating an example of contents of image feature appearance information of a processing target image;
FIG. 8 is an explanatory diagram illustrating an example of contents of image feature appearance information of an image feature A;
FIG. 9 is an explanatory diagram illustrating an example of contents of image feature appearance information of an image feature B;
FIG. 10 is a flowchart illustrating an example of processing of a map image feature comparison unit, a map acquisition unit, and a position and orientation estimation unit according to Embodiment 1;
FIG. 11 is an explanatory diagram illustrating an example of a system configuration for implementing a position and orientation calculation method according to Embodiment 2;
FIG. 12 is an explanatory diagram illustrating an example of a configuration of a 3D environment map according to Embodiment 2;
FIG. 13A is a flowchart illustrating an example of processing of an environment map creation unit and a map deployment registration unit according to Embodiment 2;
FIG. 13B is a flowchart illustrating an example of processing of an environment map creation unit and a map deployment registration unit according to Embodiment 2; and
FIG. 14 is a flowchart illustrating an example of processing of a map image feature comparison unit and a position and orientation estimation unit according to Embodiment 2.

### [Description of Embodiments]

Hereinafter, embodiments of a position and orientation calculation method and a position and orientation calculation program disclosed herein are described in detail with reference to the drawings.

### (Overview of Position and Orientation Calculation Method and Position and Orientation Calculation Program)

A 3D environment map, which is a surrounding environment map, includes a 3D position group (a 3D image feature point group) of image features, analyzes which 3D map element (a 3D image feature point) of the map is imaged in which part of an image with respect to any in-vehicle moving image (a video), and estimates (calculates) an image captured from which part, that is, an imaging position and orientation of the moving image.

V-SLAM may be generally used to estimate the imaging position and orientation of the moving image using the 3D environment map. In the V-SLAM, the moving image is input, an image feature point group of each image is extracted, and along with an image feature 3D position (a map of a 3D image feature group), an imaging position and orientation of each image is estimated from an appearance change in image of each image feature point group. Further, it is possible to estimate the imaging position and orientation in an actual coordinate system with high accuracy by using a global navigation satellite system (GNSS) information (for example, a Global Positioning System (GPS)) at a time of acquiring the moving image as an input.

The actual coordinate system is also referred to as a world coordinate system, is a coordinate system capable of uniquely expressing a location and a direction in the world, and latitude, longitude, altitude, direction, and the like are defined. There are various methods of defining the actual coordinate system, and any of these may be mutually converted.

In addition, every time the imaging position and orientation is estimated, the 3D environment map is not created, and the created 3D environment map is stored. Then, when estimating an imaging position and orientation of another moving image traveling on the same road, by using the created and stored 3D environment map, an estimation process on the imaging position and orientation may be simplified, and the imaging position and orientation may be calculated in the same coordinate system (the actual coordinate system having identical accuracy) as the used 3D environment map.

As described above, when the 3D environment map is prepared, position and orientation estimation (calculation) may be executed at a higher speed with a smaller amount of calculation. Thus, when a service is executed in a wide range, it is desirable to accumulate and manage the 3D environment map of each road in a service range. Further, in order to deploy the 3D environment map resistant to video changes depending on scenes, it is considered that a plurality of 3D environment maps are created and managed even on the same road due to ascending and descending of the road in which appearances of features are changed, a time such as weather or day and night, seasons of big changes in roadside trees, so that it is desirable to accumulate and manage more 3D environment maps.

Therefore, in order to estimate the imaging position and orientation in real-time and at a low cost by using the created and managed 3D environment map, a method of more quickly specifying a map to be used from a large number of 3D environment map group is desirable.

In general, as a method of searching for a map that matches any traveling from an accumulation database of a map group in a wide range in the related art, there is a method using a regional mesh. That is, there is a method in which a deployment map group is divided for each regional mesh, the current regional mesh is specified from position information (latitude and longitude information, and GPS information accompanying a moving image of an estimation target in a case of imaging position and orientation estimation) at any traveling desirable to a map, and a map group corresponding to the regional mesh is acquired.

The regional mesh is a grid area over a map obtained by dividing the entire country of Japan by latitude and longitude. The regional mesh is stipulated by the Ministry of Internal Affairs and Communications (JISX040) for digitization of national land information and for being used as a management area for statistical information. One regional mesh number may be calculated and specified from latitude and longitude values.

In addition, as another common method of searching for a map that matches any traveling from an accumulation database of a map group in a wide-range in the related art, there is a method of using road position and coupling information (latitude and longitude information including a coupling shape) of national roads such as road network information. That is, the road position and coupling information of national roads such as road network information is prepared in advance, and a deployment map groups are respectively associated with which road link of the road network information is related in advance. Then, there is a method in which a road link related to position information (latitude and longitude information) of any traveling desirable to the map is specified, and a deployment map associated with the same road link is acquired.

The road network is data information representing roads in the country as coupling routes (links (road links)) coupling features (nodes having latitude and longitude values) such as intersections. The road network may hold, as attributes, various pieces of information such as a speed limit, a road width, the number of road lanes, and a link travel speed (a turnaround time).

In any of these methods of using the regional mesh or using the road network, a certain group (a regional mesh or a road link) associated with a map group using a latitude and longitude value is prepared. Then, a group is specified from the latitude and longitude values of a point at which a map is searched, and a map belonging to the group is acquired. Therefore, even when selecting the map used for position and orientation estimation using in-vehicle data, the map is selected via a certain group by using latitude and longitude of the GNSS information acquired simultaneously with the in-vehicle data.

Here, when the 3D environment map to be used for calculation in the position and orientation estimation of an in-vehicle video is selected by using the latitude and longitude value of the GPS information acquired simultaneously with the in-vehicle video, there are the following problems. For example, a 3D environment map of an elevated road and a 3D environment map of a road under elevated road exist at a location of the elevated road and the road under elevated road at which the roads overlap each other in a vertical direction, but when a position and orientation of an image of the road under elevated road is estimated, since the 3D environment map is selected only by the latitude and longitude values, there is a possibility that the map of the elevated road is also acquired. That is, there is a possibility that the 3D environment maps of both the elevated road and the road under elevated road are acquired.

As a result, the position and orientation of the moving image of the elevated road may be estimated by using the incorrect 3D environment map of the road under elevated road. Therefore, feature information included in the 3D environment map of the elevated road in which view-scenes are significantly different does not coincide with data of a target vehicle of the road under elevated road, and thus the position and orientation estimation fails. Therefore, it is desirable to change to another 3D environment map and repeat the position and orientation estimation. Thus, until the correct 3D environment map of the road under elevated road is acquired and the position and orientation estimation succeeds, it takes an execution cost for undesirable maps, and it takes time until the position and orientation estimation succeeds, so that it is not possible to perform the position and orientation estimation in real-time.

The same may occur on roads, side roads, or the like, at which a position difference between the roads is within a position error of latitude and longitude of GPS information. Also in this case, the execution cost of the undesirable map is desirable until the position and orientation estimation fails or the position and orientation estimation succeeds, and it takes time until the success.

As described above, when the 3D environment map is selected only based on the latitude and longitude, position and orientation estimation is attempted by using the erroneous 3D environment map, and as a result, it takes time to perform a position and orientation estimation process, and there is a possibility that the position and orientation estimation may not be performed in real-time. Therefore, it is desirable to correctly select a 3D environment map which is not distinguishable only by latitude and longitude, such as an elevated road and a road under elevated road.

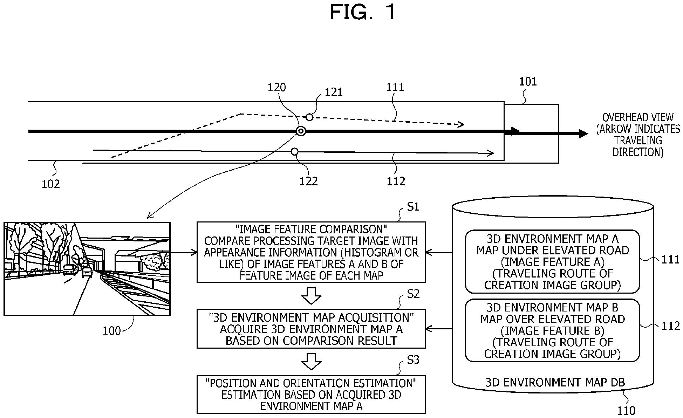

FIG. 1 is an explanatory diagram illustrating an example of an overview of a position and orientation calculation method and a position and orientation calculation program according to the present embodiment. In FIG. 1, a reference numeral 100 denotes any image (a processing target image) of image information (for example, including a moving image such as an in-vehicle video, a still image, and the like). In addition, a reference numeral 101 indicates a road under elevated road and a reference numeral 102 indicates an elevated road, and each of the roads is illustrated as an overhead view. In the overhead view, arrows indicate traveling directions. In this manner, it is seen that the road under elevated road 101 and the elevated road 102 overlap each other in latitude and longitude values.

A reference numeral 110 indicates a 3D environment map database (DB), and the 3D environment map DB 110 stores a plurality of 3D environment maps including a 3D environment map A 111, and a 3D environment map B 112. The 3D environment map A 111 is a map under the elevated road (an image feature A), and the 3D environment map A 111 may be indicated by a traveling route (dotted line arrow 111) of a creation image group in the overhead view. In the same manner, the 3D environment map B 112 is a map over the elevated road (an image feature B), and the 3D environment map B 112 may be indicated by a traveling route (solid line arrow 112) of the creation image group in the overhead view.

In the overhead view, a "⊚" (double circle) 120 indicates a GPS position, for example, latitude and longitude values of the processing target image 100, which indicates an imaging position of any image of an in-vehicle video, that is, when the in-vehicle video for which position and orientation estimation is desired is an in-vehicle video of traveling the road under elevated road. In the overhead view, a "O" (circle) 121 on the dotted line arrow 111 indicates a position closest to the GPS position 120 of the processing target image 100 in the image group used when the 3D environment map A 111 is created. In the same manner, a "O" (circle) 122 on the arrow 112 in the overhead view indicates a position closest to the GPS position 120 of the processing target image 100 in the image group used when the 3D environment map B 112 is created.

In such a situation, with the position and orientation calculation method and position and orientation calculation program, it is possible to calculate a position and orientation by executing each process of image feature comparison (S1), 3D environment map acquisition (S2), and position and orientation estimation (S3).

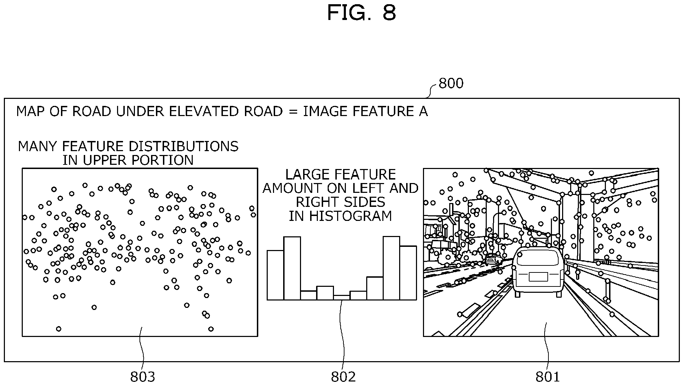

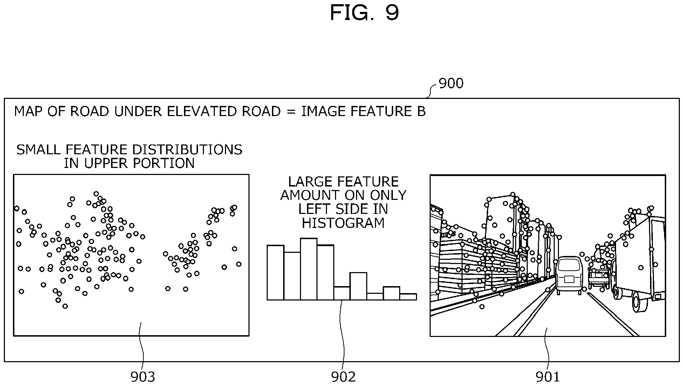

In the processing of "image feature comparison" (S1), first, the 3D environment map A 111 under the elevated road and the 3D environment map B 112 over the elevated road are selected from the 3D environment map DB 110, as 3D environment maps having an "imaging position of image information" within a predetermined distance from the GPS position "⊚" 120 of the processing target image 100. "Information on creation image" including the respective closest imaging positions in the selected 2 maps, that is, creation image information on the "O" 121 (a reference numeral 800 in FIG. 8 described below) and creation image information on the "O" 122 (a reference numeral 900 in FIG. 9 described below) are specified.

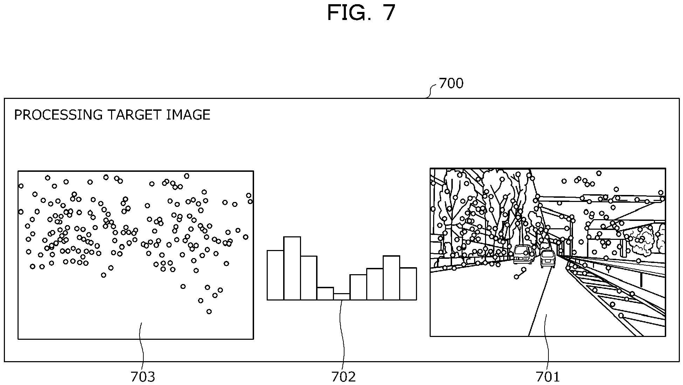

Then, image feature appearance information (the reference numeral 800 in FIG. 8 and the reference numeral 900 in FIG. 9 described below) in images of the creation image information of the specified 2 maps is compared with calculated image feature appearance information (a reference numeral 700 in FIG. 7 described below) of the processing target image 100. Specifically, for example, comparison of appearance distributions of image features of the image, comparison of image luminance or histograms of the image features, or the like is performed. In this manner, appearance information (the image feature appearance information) of the image features A and B of the image at a time of creation of each map may be compared with the image feature appearance information of the processing target image.

In the processing of "3D environment map acquisition" (S2), a 3D environment map for position and orientation calculation (for example, the "3D environment map A" 111 determined to have the highest similarity) may be specified and acquired from the 3D environment map DB 110 based on the comparison result in the processing of "image feature comparison" (S1). Unlike the method in the related art, the data acquisition target is limited to the 3D environment map obtained by narrowing down to only the roads which are considered to be the same road through the image feature comparison, not a 3D environment map selected only by latitude and longitude values, so that it is possible to acquire the 3D environment map for position and orientation calculation at higher speed and with higher accuracy and lower cost than the method in the related art.

In the processing of "position and orientation estimation" (S3), the position and orientation is estimated (calculated) based on the acquired 3D environment map A 111. In the position and orientation estimation process, it is possible to estimate (calculate) the imaging position and orientation by using the acquired data of the 3D environment map (the 3D environment map A 111) for position and orientation calculation, and the processing target image (in-vehicle video) 100 and the GNSS data, which are position and orientation estimation targets, for example, by using V-SLAM or the like.

As a 3D environment map related to in-vehicle data for which imaging position and orientation is to be estimated, a 3D environment map with more similar image feature appearance conditions in the image when creating a nearby position (latitude and longitude) may be preferentially specified, so that it is possible to correctly select 3D environment maps of the same route, at which scenes seen from the route are to be similar, which may not be discriminated only by the latitude and longitude of the elevated road, the road under elevated road, or the like. Thus, it is possible to reduce a data acquisition cost for the undesirable 3D environment map, a position and orientation estimation execution cost, and a time until position and orientation estimation is completed, and to execute position and orientation estimation in real-time.

Hereinafter, detailed contents of a position and orientation calculation method and a position and orientation calculation program will be described in Embodiment 1 and Embodiment 2.

### (Embodiment 1)

### (System Configuration Example)

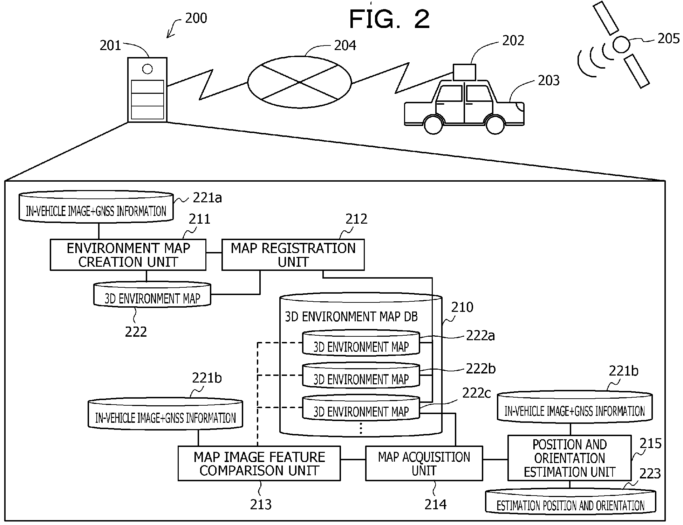

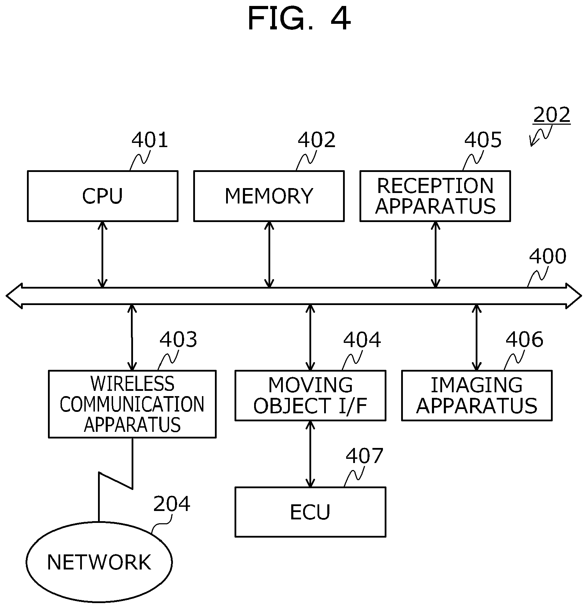

FIG. 2 is an explanatory diagram illustrating an example of a system configuration for implementing a position and orientation calculation method according to Embodiment 1. In FIG. 2, a system (a moving object position and orientation calculation system 200) that implements the position and orientation calculation method according to Embodiment 1 includes a server 201 and an in-vehicle device 202 mounted on a moving object 203. The in-vehicle device 202 is mounted on the moving object 203, and collects GNSS information from a satellite 205 and a moving image from an in-vehicle camera (an imaging apparatus 406 illustrated in FIG. 4 described below).

Then, the moving object position and orientation calculation system 200 is configured with the server 201 and the in-vehicle device 202 being connected by a network 204. In addition, the moving object position and orientation calculation system 200 may realize functions of the moving object position and orientation calculation system 200 by a cloud computing system (not illustrated).

Specifically, the moving object 203 is, for example, a connected car that collects information. The moving object 203 may be a general passenger vehicle, a commercial vehicle such as a taxi, a two-wheeled vehicle (motorcycle or bicycle), a large-sized vehicle (bus or truck), or the like. The moving object 203 may be a ship that moves on the water, an airplane that moves over the sky, an unmanned airplane (drone), a self-moving robot, or the like.

The in-vehicle device 202 collects information on the moving image of the in-vehicle camera (the imaging apparatus 406). The in-vehicle device 202 collects information on the moving object 203 including GNSS information which is an example of positioning information. The information on the moving object 203 also may include orientation information or the like on the moving object 203, collected from the moving object 203. The in-vehicle device 202 may collect information on an imaging time and the like.

The in-vehicle device 202 may be a dedicated apparatus mounted on the moving object 203 or may be detachable device. The in-vehicle device 202 may be a drive recorder mounted on a general passenger vehicle, a commercial vehicle such as a taxi, or the like. Further, a mobile terminal apparatus such as a smartphone or a tablet terminal apparatus having a communication function may be used in the moving object 203. In addition, all or some of various functions of the in-vehicle device 202 may be achieved by using a function included in the moving object 203.

Therefore, the expression "in-vehicle" of the in-vehicle device 202 is not limited to the meaning of the dedicated apparatus mounted on the moving object. The in-vehicle device 202 may be any type of apparatus as long as the apparatus has a function capable of collecting information in the moving object 203 and transmitting the collected information to the server 201.

The in-vehicle device 202 acquires information (in-vehicle data) of the moving object 203 that includes information on an in-vehicle moving image and GNSS information, and stores the acquired in-vehicle data. Then, the stored in-vehicle data is transmitted to the server 201 via the network 204 by wireless communication. In addition, various types of data including a program distributed from the server 201 is received by wireless communication via the network 204.

The in-vehicle device 202 may acquire information on another moving object 203 traveling nearby by a short distance communication function, and may transmit the information to the server 201. The in-vehicle devices 202 may communicate with each other by the short distance communication function, and may communicate with the server 201 via another in-vehicle device 202.

As described above, in the moving object position and orientation calculation system 200, the server 201 may acquire in-vehicle data from the in-vehicle device 202 mounted on the moving object 203, and may distribute various types of data to each in-vehicle device 202.

Further, the in-vehicle device 202 may not include a communication section. That is, the in-vehicle device 202 may not be coupled to the server 201 via the network 204. In this case, data accumulated in the in-vehicle device 202 may be input to the server 201 in off-line (for example, manually or the like via a recording medium).

The server 201 includes an environment map creation unit 211, a map registration unit 212, a map image feature comparison unit 213, a map acquisition unit 214, and a position and orientation estimation unit 215. The server 201 has an in-vehicle moving image and GNSS information ("in-vehicle moving image+GNSS information" 221a for 3D environment map creation, and "in-vehicle moving image+GNSS information" 221b for position and orientation estimation). The server 201 may include a 3D environment map DB 210 as internal process data.

The environment map creation unit 211 inputs the "in-vehicle moving image+GNSS information" 221a for 3D environment map creation, and creates an environment map, for example, a 3D (three-dimensional) environment map 222 from the "in-vehicle moving image+GNSS information" 221a.

The map registration unit 212 registers the 3D environment map 222 created by the environment map creation unit 211 in the 3D environment map DB 210. At this time, an index for searching may be created. For example, any database item may be held as another table for searching. By using the index, it is possible to search the 3D environment map DB 210 at a higher speed.

The map image feature comparison unit 213 inputs the "in-vehicle moving image+GNSS information" 221b for position and orientation estimation related to the processing target image 100, and compares an image feature related to the "in-vehicle moving image+GNSS information" 221b with an image feature of the image of the 3D environment maps 222 registered in the 3D environment map DB 210.

Based on the comparison result by the map image feature comparison unit 213, the map acquisition unit 214 specifies (acquires) a calculation environment map to be used for calculation of a position and orientation of the moving object 203 or the imaging apparatus of the moving object, from a plurality of environment maps 222.

The position and orientation estimation unit 215 calculates the position and orientation ("estimation position and orientation" 223) of the moving object 203 or the imaging apparatus (the in-vehicle device 202) of the moving object in the processing target image 100 by using the calculation environment map acquired by the map acquisition unit 214.

In FIG. 2, the server 201 is configured to include the environment map creation unit 211, the map registration unit 212, the map image feature comparison unit 213, the map acquisition unit 214, and the position and orientation estimation unit 215. Although not illustrated, at least one of these respective functional units may be included in the in-vehicle device 202, in addition to the server 201, or instead of the server 201. When the in-vehicle device 202 includes at least one of the respective functional units 211, 212, 213, 214, and 215, the in-vehicle device 202 may have the same contents of the processing executed by the server 201. The server 201 may include a plurality of servers, and the respective functional units may be distributed and the processing may be performed.

### (Hardware Configuration Example of Server)

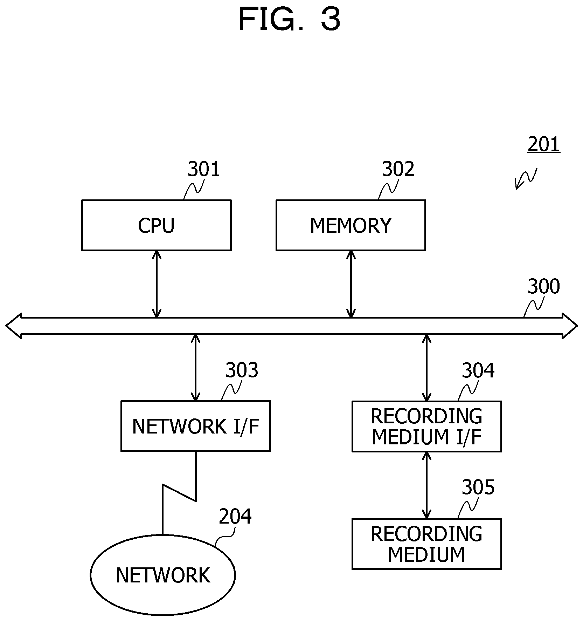

FIG. 3 is a block diagram illustrating an example of a hardware configuration of a server. The server 201 that is an example of an information processing apparatus includes one or more of a central processing unit (CPU) 301, a memory 302, a network interface (I/F) 303, a recording medium I/F 304, and a recording medium 305. The respective components are coupled to each other through a bus 300.

Here, the CPU 301 administrates control of the entire server 201. For example, the memory 302 includes a read-only memory (ROM), a random-access memory (RAM), a flash ROM, and the like. Specifically, the flash ROM and the ROM store various programs, while the RAM is used as a work area of the CPU 301. The programs stored in the memory 302 are loaded into the CPU 301 and cause the CPU 301 to execute coded processing.

The network I/F 303 is coupled to the network 204 through a communication line and is connected to other apparatuses (for example, in-vehicle device 202 and other servers and systems) via the network 204. Then, the network I/F 303 serves as an interface with the network 204 and the inside of the server 201 and controls input and output of data from and to the other apparatuses. As the network I/F 303, a modem, a LAN adaptor, or the like may be used, for example.

The recording medium I/F 304 controls reading and writing of data from and to the recording medium 305 in accordance with control by the CPU 301. The recording medium 305 stores data written under control by the recording medium I/F 304. As the recording medium 305, a magnetic disk, an optical disc, or the like may be used, for example.

Note that, the server 201 may include, for example, a solid-state drive (SSD), a keyboard, a pointing device, a display, and the like, in addition to the components described above.

### (Hardware Configuration Example of In-vehicle Device)

FIG. 4 is a block diagram illustrating an example of a hardware configuration of an in-vehicle device. The in-vehicle device 202, which is an example of an information collection apparatus, includes a CPU 401, a memory 402, a wireless communication apparatus 403, a moving object I/F 404, a reception apparatus 405, and an imaging apparatus 406. In addition, the respective components are coupled to each other through the bus 400.

The CPU 401 administrates control of the entire in-vehicle device 202. The memory 402 includes, for example, a ROM, a RAM, a flash ROM, and the like. Specifically, for example the flash ROM or the ROM stores various programs, and the RAM is used as a work area of the CPU 401. The programs stored in the memory 402 are loaded into the CPU 401 and cause the CPU 401 to execute coded processing.

The wireless communication apparatus 403 receives transmitted radio waves or transmits the radio waves. The wireless communication apparatus 403 has a configuration including an antenna and a reception apparatus, and is provided with a function of transmitting and receiving communication such as mobile communication (specifically, for example, 3G, 4G, 5G, PHS communication, or the like) according to various communication standards, Wi-Fi (registered trademark), or the like.

The moving object I/F 404 controls an interface between the moving object 203 and the inside of the in-vehicle device 202, and controls an input and an output of data from and to the moving object 203. Therefore, the in-vehicle device 202, for example, may collect information from an ECU (including various sensors and the like) 407 included in the moving object 203 via the moving object I/F 404. The moving object I/F 404 may be, specifically, for example, a connector to be used when coupled by wire or a near field wireless communication (specifically, for example, a Bluetooth (registered trademark)) apparatus or the like.

The reception apparatus (for example, a GNSS reception apparatus such as a GPS reception apparatus) 405 receives radio waves from a plurality of satellites 205, and calculates the current position on the earth from information included in the received radio waves.

The imaging apparatus (for example, a camera or the like) 406 is a device that captures a still image or a moving image and outputs the captured image as image information. Specifically, for example, the imaging apparatus has a configuration in which a lens and an imaging element are provided. Specifically, in addition to a video of a monocular camera, image pairs of a plurality of cameras (stereo cameras) and the like are included. In this manner, the imaging apparatus 406 may acquire image information configured with a moving image including a video (a moving image) or a single image (a still image). In addition, the imaging apparatus 406 may be a drive recorder or the like mounted on a general passenger vehicle or a commercial vehicle such as a taxi.

A captured image by the imaging apparatus 406 is stored on the memory 402. The imaging apparatus 406, such as a camera, may have an image recognition function, a bar code or a QR code (registered trademark) reading function, an optical mark reader (OMR) function, an optical character reader (OCR) function, and the like.

As illustrated in FIG. 4, the reception apparatus 405 and the imaging apparatus 406 may be included in the in-vehicle device 202, or may be included in the moving object 203 or separately and externally attached and used. At this time, data exchange between the reception apparatus 405 or the imaging apparatus 406 and the in-vehicle device 202 may be performed by wired or wireless communication.

When the reception apparatus 405 or the imaging apparatus 406 is not provided in the in-vehicle device 202, such information may be acquired via the moving object I/F 404 or the like. In addition, although not illustrated, the in-vehicle device 202 may include various input apparatuses, a display, an interface for reading and writing recording medium such as a memory card, various input terminals, and the like.

### (Contents of 3D Environment Map)

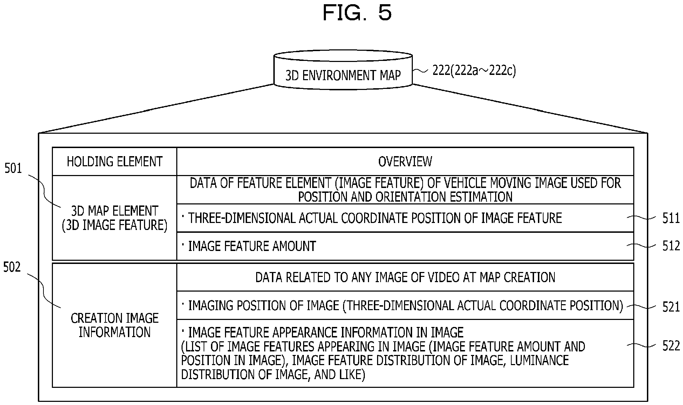

FIG. 5 is an explanatory diagram illustrating an example of a configuration of a 3D environment map according to Embodiment 1. In FIG. 5, the 3D environment map 222 (222a to 222c) includes a 3D map element (3D image feature) 501 and creation image information 502.

As illustrated in FIG. 5, the 3D map element 501 is data of a feature element (image feature) of an in-vehicle moving image to be used for position and orientation estimation (calculation). Specifically, a holding element includes various types of information including the "3D map element (3D image feature)" 501 and the "creation image information" 502. Although not illustrated, "ID" information that is unique identification information for identifying feature point group information may be provided. As described above, the 3D environment map 222 has a data configuration having 3D image features and creation image information.

The 3D map element 501 is data of a feature element (image feature) of image information (moving image) to be used in a position and orientation estimation process. Specifically, a "three-dimensional actual coordinate position of image feature" 511 and an "image feature amount" 512 are included. The image feature may be, for example, an image feature point, an image feature line, or the like extracted from an image by a known image processing method. The three-dimensional actual coordinate position of image feature 511 may be calculated by a process such as SLAM by using known triangulation, optimization calculation for a minute position change, or the like, using a change in a position in the image when the same image feature appears in a plurality of images, or the like.

The image feature amount 512 may be extracted by a common image process by the processing such as SLAM. For example, a value or the like obtained by converting a luminance difference condition between a pixel serving as the image feature and a peripheral pixel into a binary value may be used. Therefore, the image feature amount 512 depends on a type of image process to be used (a type of image feature to be extracted in the image process). Since image feature amounts are generally comparable to each other, it is possible to specify a corresponding 3D image feature in the 3D environment map 222, through comparison with any image feature amount.

The position and orientation estimation unit 215 illustrated in FIG. 2 compares an actual position at which the respective 3D map elements 501 of which the three-dimensional actual coordinate position of image feature 511 is known in the 3D environment map 222 appears in the in-vehicle moving image of an imaging position and orientation estimation target, with a position in the image to be captured, which may be geometrically calculated from the estimated imaging position and orientation. Then, optimization is performed so as to reduce a difference between the positions in the image, so that it is possible to estimate (calculate) the imaging position and orientation of the in-vehicle moving image. At this time, it is desirable to specify an image feature equivalent to the image feature extracted from the in-vehicle moving image of the position and orientation estimation target, from a large number of respective 3D map elements (3D image features) 501, and the image feature amount 512 may be used for this specification.

The creation image information 502 is information on each any image of the in-vehicle moving image used to create the 3D environment map 222 by the environment map creation unit 211. The creation image information 502 includes at least a "(information on) imaging position (of image)" 521, which is a three-dimensional actual coordinate position or the like, and "image feature appearance information (in image)" 522. These pieces of information are used in the map image feature comparison unit 213.

The creation image information 502 does not have to be held for all the images of the in-vehicle video at a time of creating the 3D environment map 222, and may be held for only 1 image. Meanwhile, in order to improve accuracy of specifying the 3D environment map 222 using the map image feature comparison unit 213, it is desirable to hold an image group that covers the entire moving image (video), in particular, the entire traveling route of the video as much as possible. For example, an image group, from which a video is thinned out by any method such as a method with a traveling distance for each any distance, for each any imaging time interval, and for each any number of image frames, may be held.

The imaging position of image 521 may be, for example, information on an image imaging position and orientation calculated simultaneously with creation of the 3D environment map 222 by a known process such as SLAM. When the method of creating the 3D environment map 222 is a method by which the imaging position and orientation is not calculated, the GNSS information used to create the 3D environment map 222 may be used.

The position and orientation may be estimated by using the 3D environment map 222 in which the in-vehicle moving image is newly created after the 3D environment map 222 is created, and information on the imaging position and orientation may be calculated and used. By using a result of the position and orientation estimation unit having high accuracy by the GNSS information, it is possible to perform more accurate comparison in the map image feature comparison unit 213, so that it is possible to more accurately execute map selection.

The image feature appearance information in image 522 is used for comparing image similarities in the map image feature comparison unit 213. The image feature appearance information in image 522 does not have to be the same as an image feature and information using the image feature used in the position and orientation estimation unit 215, and may be image information used for common image similarity comparison. The image feature appearance information in image 522 is, for example, "list of image features (image feature amount and appearance position)", "image feature distribution of image", "luminance distribution of image", or the like that appears in the image. Among these, it is preferable that calculation from the image be as simple as possible. Thus, it is possible to implement a higher-speed process.

The list of image features (image feature amount and position in image) is, for example, an image feature amount extracted from the image and an appearance position in the image. When the image feature is the same as the 3D image feature 501, a feature appearance position in the image (the three-dimensional coordinate position of image feature 511) or the image feature amount 512 when the 3D image feature 501 is calculated may be used for the list of the image features.

The image feature distribution of the image is a distribution condition of any image feature in the image. Regarding the image feature distribution of the image, for example, the image may be divided into N, and the number of appearances of the image feature for each of N divided image portions may be obtained, or the image features may be grouped in advance by the image feature amount, and the number of each group that appears in the divided image portion or the entire image, an appearance ratio, a statistical quantity such as a histogram, or the like may be obtained.

In a case of dividing the image, not all of the divided regions of the image but some of the divided regions may be used, or instead of image division, only any partial region of the image may be used for calculation. For example, only the upper half of the image, division of the upper 1/3 of the image into 4 parts, or the like may be used for calculation. This image feature distribution may be calculated by using the same image feature as the 3D image feature 501, or may be calculated by using a different image feature.

Note that, when the same image feature as the 3D image feature 501 is used for the list of the image features, the image feature appearance information 522 is a structured element obtained by summarizing the 3D image feature 501 as a list of the 3D image features 501 that may be simultaneously viewed in any image. Therefore, the position and orientation estimation unit 215 may also be used to select the 3D image feature 501 to be used in the image during the position and orientation estimation calculation from all the 3D image features 501 in the 3D environment map, and may perform more accurate position and orientation estimation. That is, when specifying a 3D image feature from an image feature amount, it is possible to determine whether or not the 3D image feature that may not be simultaneously viewed in the image feature appearance information 522 is specified, and to avoid the wrong specification.

On the other hand, regarding the creation image information 502 used in the map image feature comparison unit 213, it is significant to grasp an image feature tendency of the entire image of each any image, and accurate association of individual image features in the position and orientation estimation unit 215, the environment map creation unit 211, and the like may not be desirable, so that it is possible to use various image features other than the image feature of the 3D image feature 501.

Regarding the luminance distribution of the image, for example, a luminance histogram of the image or a luminance statistical quantity such as frequent luminance may be obtained for the entire image, a part of the image, or each image portion obtained by dividing the image into N. Note that, the image feature appearance information 522 is not limited to one type in the entire 3D environment map 222, and a plurality of types may be held in one 3D environment map 222, or different types depending on a location, a road type, a creation time, and the like may be held.

The image feature appearance information 522 may be obtained by using not only the position or distribution of these image features obtained from only the image holding the creation image information 502 but also another image in the same in-vehicle moving image as the holding image. For example, an appearance position of the same image feature point and a luminance distribution condition in each image are compared between the image holding the creation image information 502 and the other image, and the image feature appearance information 522 may be obtained by using a difference change amount that is the comparison result.

As the other image, for example, a previous frame image, a subsequent frame image, or the like may be used as an image captured at a near time of the image holding the creation image information 502 in the same in-vehicle moving image. Also, for example, a difference change amount of the image features obtained from the 2 images is an appearance position change amount in the image of the same image feature point or luminance of the 2 images, and may be obtained as an image optical flow amount by a common image process.

As the image feature appearance information 522 using the other image, a list of the optical flow amount in the image holding the creation image information 502 and a flow appearance position in the image may be obtained by using the position change amount in image (optical flow amount) of the image feature point, instead of the image feature amount of the image feature point. Instead of the luminance distribution, a movement change amount distribution in image (optical flow distribution) of each pixel or each pixel block of the holding image may be obtained by using the movement change amount in image (optical flow amount) of the pixel or the pixel block obtained from a position change condition of similar brightness as to how much each pixel of one image or the pixel block obtained by gathering a plurality of adjacent pixels moves in the other image.

The closer the subject to be imaged in the image is to the imaging position, the larger the movement change amount in image is, so that a magnitude of the movement change amount in image (optical flow value) is similar to a magnitude of a distance to a peripheral object. The image feature appearance information 522 obtained by using the movement change amount in image represents a distance condition to the peripheral object in the image. Therefore, the same image feature appearance information 522 may be stably obtained for any in-vehicle moving image regardless of a scene in which a change in appearance of peripheral objects is large, such as weather at a time of imaging. Therefore, the map image feature comparison unit 213 that compares image similarities by using an image different from the in-vehicle moving image at a time of map creation may also perform image similarity comparison more accurately.

Note that, a magnitude of the difference change amount, in particular, a magnitude of the optical flow amount is proportional to a difference (distance) between the imaging positions of the 2 images used for the calculation. Therefore, instead of being used as it is for the image feature appearance information 522, normalization may be performed by using a value obtained by dividing with the maximum value, the minimum value, or an average value of a change amount of the entire image, conversion into a level change amount that changes stepwise is performed by determining the number of steps in the entire image, or any statistical correction may be performed, so that a value independent of the difference between the imaging positions of the 2 images may be used.

### (Contents of Environment Map Creation Unit 211)

The environment map creation unit 211 illustrated in FIG. 2 creates the 3D environment map 222 to be used in the position and orientation estimation unit 215 by any known method using the "in-vehicle moving image+GNSS information" 221b for position and orientation estimation as an input. For example, V-SLAM using a video is executed to obtain a 3D position of an image feature. Then, a relative position with unknown scale is converted into a latitude and longitude value in the actual coordinate system by GNSS information and is calculated, so that the 3D environment map 222 may be obtained.

At this time, the conversion into the actual coordinate system may be executed simultaneously with the 3D position calculation, or instead of converting the 3D position itself of the image feature of the video into a value in the actual coordinate system and holding the value, the 3D position may be held as a relative value, and a conversion method to the actual coordinate system, for example, a value of a coordinate system conversion matrix or the like may be held separately.

In order to obtain a position and orientation in the position and orientation estimation unit 215 by using the 3D environment map 222 created in the environment map creation unit 211, the image features for a 3D position (the 3D image features 501 of the 3D environment map 222) to be used in the environment map creation unit 211 and the position and orientation estimation unit 215 are desirable to be the same.

On the other hand, the 3D environment map 222 has image feature appearance information in image 522 as the creation image information 502, and this information may not from the same image feature as the image feature (the 3D image feature 501) for which the 3D position is calculated. In this case, information of the image feature appearance information in image 522 of the 3D environment map 222 is desirable to be calculated by the environment map creation unit 211. For example, different image features are extracted to calculate a distribution (image feature distribution of the image), a luminance distribution of the image is calculated (luminance distribution of the image), and the like.

Specifically, in the server 201 illustrated in FIG. 2, the environment map creation unit 211 may realize the function by the CPU 301 executing the program stored in the memory 302. In addition, specifically, in the in-vehicle device 202 illustrated in FIG. 4, the function may be realized by the CPU 401 executing the program stored in the memory 402, for example.

### (Contents of Map Registration Unit 212)

The map registration unit 212 compares and specifies the 3D environment map 222 created by the environment map creation unit 211 by the map image feature comparison unit 213, and registers and manages the 3D environment map 222 in the 3D environment map DB 210 or the like so as to be easily quoted by the position and orientation estimation unit 215. Therefore, as described above, an index for searching may be created and registered. The 3D environment map DB 210 is a database for the 3D environment maps 222 to be used by the position and orientation estimation unit 215, and a database for holding and managing the created 3D environment map 222.

Specifically, for example, in the server 201 illustrated in FIG. 3, the map registration unit 212 may realize the function by the CPU 301 executing the program stored in the memory 302 or by the network I/F 303, the recording medium I/F 304, or the like. Also, specifically, in the in-vehicle device 202 illustrated in FIG. 4, the function may be realized by the CPU 401 executing the program stored in the memory 402 or by the wireless communication apparatus 403 or the like, for example.

### (Processing Procedure of Environment Map Creation Unit 211 and Map Registration Unit 212)

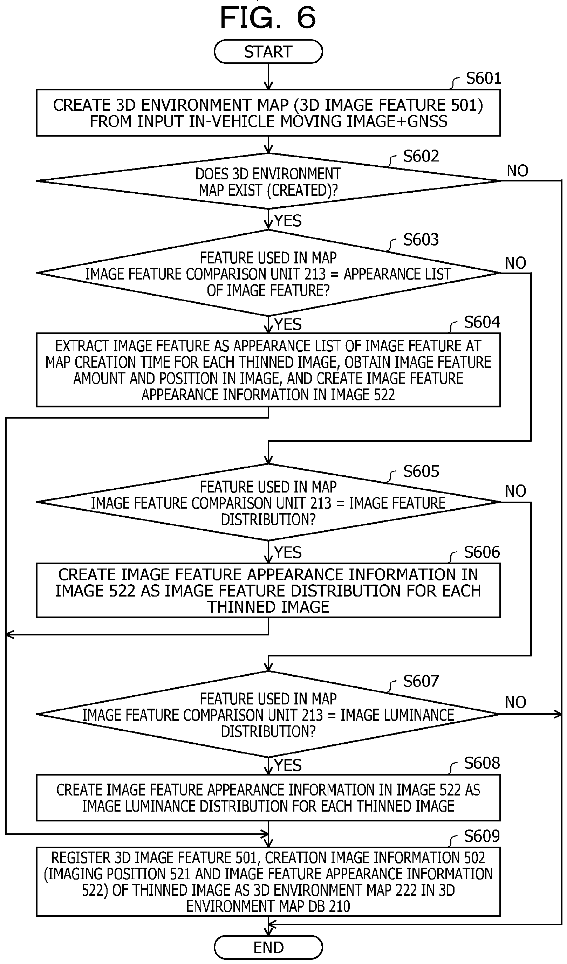

FIG. 6 is a flowchart illustrating an example of processing of an environment map creation unit and a map registration unit according to Embodiment 1. In the flowchart in FIG. 6, the 3D environment map 222, more specifically, the 3D image feature 501 of the 3D environment map 222 is created from an input in-vehicle moving image and GNSS information (step S601).

Then, it is determined whether or not the 3D environment map 222 (the 3D image feature 501) is created (step S602). Here, in a case where the 3D environment map 222 (the 3D image feature 501) may not be created and does not exist (No in step S602), a series of processes is ended without doing anything.

On the other hand, when the 3D environment map 222 (the 3D image feature 501) may be created (Yes in step S602), next, it is determined whether or not a feature used in the map image feature comparison unit 213 is in an appearance list of image features (step S603).

Here, when the feature used in the map image feature comparison unit 213 is in the appearance list of the image feature (Yes in step S603), the image feature is extracted as the appearance list of the image feature at a time of map creation for each thinned image. Then, an image feature amount and a position in image are obtained, and the image feature appearance information in image 522 ("list of image features (image feature amount and appearance position)") is created (step S604). Thereafter, the procedure proceeds to step S609.

In step S603, when the feature used in the map image feature comparison unit 213 is not in the appearance list of the image features (No in step S603), it is determined whether or not the feature used in the map image feature comparison unit 213 is an image feature distribution (step S605).

Here, when the feature used in the map image feature comparison unit 213 is the image feature distribution (Yes in step S605), the image feature appearance information in image 522 ("image feature distribution") is created as an image feature distribution for each thinned image (step S606). Thereafter, the procedure proceeds to step S609.

In step S605, when the feature used in the map image feature comparison unit 213 is not the image feature distribution (No in step S605), it is determined whether or not the feature used in the map image feature comparison unit 213 is an image luminance distribution (step S607).

Here, when the feature used in the map image feature comparison unit 213 is the image luminance distribution (Yes in step S607), the image feature appearance information in image 522 ("image luminance distribution") is created as the image luminance distribution for each thinned image (step S608). Thereafter, the procedure proceeds to step S609.

In step S607, when the feature used in the map image feature comparison unit 213 is not the image luminance distribution (No in step S607), a series of processes is ended without doing anything thereafter. The processing up to this point (each process in steps S601 to S608) may be performed, for example, by the environment map creation unit 211.

Thereafter, the 3D image feature 501 and the creation image information 502 (the imaging position 521 and the image feature appearance information 522) of the thinned image are registered as the 3D environment map 222 in the 3D environment map DB 210 (step S609). Thus, a series of processes is ended. The processing in step S609 may be performed, for example, by the map registration unit 212.

With the procedure of such a process, the 3D environment map 222 may be created from the in-vehicle moving image and the GNSS information ("in-vehicle moving image+GNSS information" 221a for 3D environment map creation), and the created 3D environment map 222 may be registered in the 3D environment map DB 210.

### (Contents of Map Image Feature Comparison Unit 213)

The map image feature comparison unit 213 inputs an in-vehicle video (moving image) of which a position and orientation is to be estimated and GNSS information ("in-vehicle moving image+GNSS information" 221b for position and orientation estimation) which is positioning information such as GPS acquired simultaneously with the in-vehicle moving image, and specifies a 3D environment map group related to the in-vehicle moving image from the 3D environment map DB 210 registered by the map registration unit 212.

Specifically, in the server 201 illustrated in FIG. 2, the map image feature comparison unit 213 may realize the function by the CPU 301 executing the program stored in the memory 302. In addition, specifically, in the in-vehicle device 202 illustrated in FIG. 4, the function may be realized by the CPU 401 executing the program stored in the memory 402, for example.

Specifically, for example, the map image feature comparison unit 213 may specify a 3D environment map group related to the in-vehicle moving image by the following procedure.

First, the map image feature comparison unit 213 extracts any image of the in-vehicle moving image as a position and orientation estimation target, which is a target for image feature comparison. The number of any images to be extracted is any number. For example, any one image of the in-vehicle moving image may be extracted, or a plurality of images may be extracted. In order to complete the comparison process quickly, it is preferable to extract one image. On the other hand, in order to select the 3D environment map 222 to be specified without omission, a plurality of images may be used, and image features of each image may be compared.

For each extracted any image, the map image feature comparison unit 213 calculates an image feature corresponding to the image feature appearance information in image 522 of the creation image information 502 of each 3D environment map 222 in the 3D environment map DB 210. At this time, in a case where the 3D environment map 222 includes a plurality of types of creation image information (image feature appearance information) 522, any one, for example, one that is more easily calculated may be selected and used, or any plurality of types, for example, all types may be used to obtain respective similarities, and the similarities may be statistically aggregated to finally determine the similarity.

As an example, a case of one type of image feature appearance information 522 will be described. For example, in a case where the image feature appearance information in image 522 is a list of image features (image feature amount and appearance position) that appear in the image, the same image feature is extracted from the image, and a list of appearance positions in the image is created together with the image feature amount.

Note that, in a case where the image feature is the same as the 3D image feature 501, the position and orientation estimation unit 215 may hold the image feature for use as an image feature of the image, and the position and orientation estimation unit 215 may not extract the image feature again.

When the image feature appearance information in image 522 is an image feature distribution of the image, an image distribution condition of the entire image or part of the image is calculated in the same manner as the image feature appearance information in image 522. In the same manner, in a case where the image feature appearance information in image 522 is a luminance distribution of the image, a luminance distribution of the entire image or part of the image is calculated in the same manner as the image feature appearance information in image 522.

Note that, when the "image feature appearance information in image" 522 is a difference change amount calculated by using another image, in the same manner, the map image feature comparison unit 213 obtains a difference change amount by using the other image (for example, an image frame before or after a near time) of the same in-vehicle moving image in addition to the image for which position and orientation is desired to be estimated. Then, in the same manner as the "image feature appearance information in image" 522, a list of the difference change amount and an appearance position in image of the difference change amount, or a distribution in image may be calculated.

Next, the map image feature comparison unit 213 acquires an imaging position of the any image, from the GNSS information in the "in-vehicle moving image+GNSS information" 221b for position and orientation estimation. Then, among the respective 3D environment maps 222, the 3D environment map 222 having the imaging position of image 521 and the creation image information 502 in which the imaging position is within a predetermined distance is selected, and the creation image information 502 having the imaging position of image 521 closest to the imaging position in the selected 3D environment map 222 is specified. At this time, the 3D environment map 222 may be selected in advance to some extent by using a known method, for example, a regional mesh or the like.

Next, the map image feature comparison unit 213 compares the image feature appearance information in image 522 of the specified 3D environment maps 222 with equivalent information calculated in each extracted any image, determines whether or not the 2 pieces of information are similar, and calculates an image similarity. For example, when the image feature appearance information in image 522 is a list of image features (an image feature amount and an appearance position), the numbers of image features of the same image feature amount in the lists of both images may be compared. In addition, the numbers of image features that appear at similar appearance positions for the same image feature amount may be compared.

When the image feature appearance information in image 522 is an image feature distribution, whether the numbers of image features of the entire image of both images are similar to each other, whether ratios of the number of image features of each part to the entire image of the image or another image part to the entire image of the image are similar to each other, whether the numbers of appearance groups of the image feature group, a frequency and an appearance tendency in the image are similar to each other, whether appearance ratios of the group or histograms are similar to each other, and the like may be compared.

In the same manner, when the "image feature appearance information in image" 522 is a luminance distribution of the image, whether luminance histograms of both images are similar to each other, whether a luminance frequency and an appearance tendency are similar to each other, whether the most frequent luminance and the like are similar to each other, and the like may be compared.

When the "image feature appearance information in image" 522 is a difference change amount calculated by using another image, the comparison may be performed by using the same method as any comparison method of the case where the image feature appearance information in image 522 is the list of image features (image feature amount and appearance position) and the case where the image feature appearance information in image 522 is the image luminance distribution. In each method, it is possible to compare the movement change amount of the image feature instead of the image feature amount by using the movement change amount of each pixel or pixel block instead of a luminance value of each pixel or pixel block of the image.

In the image similarity comparison process, any similar image comparison method by the "image feature appearance information in image" 522 may be used.

Next, the 3D environment map 222 is selected according to the image similarity obtained for each 3D environment map 222 for each any image. For example, when there are a plurality of any images, a statistical quantity (for example, an average value, a maximum value, a minimum value, a median value, or the like) of the image similarity of all the any images may be obtained for each 3D environment map 222, and may be set as a final similarity to the in-vehicle video of the position and orientation estimation target of each 3D environment map 222. Then, the final similarities are compared, and one map having the highest similarity is selected.

Note that, in the position and orientation estimation process by the position and orientation estimation unit 215, in a case where priority is given to position and orientation estimation with high accuracy even when a processing time is slightly longer than the position and orientation estimation at high speed in real-time, in a case where there are the 3D environment maps 222 with similar final similarities and it is difficult to narrow down to one, or the like, the map image feature comparison unit 213 may select a plurality of 3D environment maps 222 having similarities with the image feature appearance information in image 522 equal to or higher than a certain extent, instead of finally selecting one 3D environment map 222. At this time, the priority may be set in descending order of similarities.

In addition, in a case where only the 3D environment map 222 having a low similarity may be selected, the position and orientation estimation process may be abandoned (canceled) assuming that the 3D environment map 222 used for the position and orientation estimation process is not found.

A specific example of map image feature comparison processing contents will be described with reference to FIGs. 1 and 7 to 8. FIG. 7 is an explanatory diagram illustrating an example of contents of image feature appearance information of a processing target image, FIG. 8 is an explanatory diagram illustrating an example of contents of image feature appearance information of the image feature A, and FIG. 9 is an explanatory diagram illustrating an example of contents of image feature appearance information of the image feature B.

FIG. 7 illustrates the content of the image feature appearance information 700 of an image at a GPS position of the "⊚" 120 in the overhead view illustrated in FIG. 1, in the processing target image 100 illustrated in FIG. 1, that is, an in-vehicle video traveling over a road under elevated road, which is an in-vehicle moving image for which position and orientation is desired to be estimated. In the image feature appearance information 700, a reference numeral 701 indicates a plot of an appearance distribution of an image feature over the processing target image 100, a reference numeral 702 indicates a histogram of image luminance, the image feature, or a difference change amount of the processing target image 100, and a reference numeral 703 indicates only the extracted appearance distribution of the image feature of the processing target image 100.

In FIG. 8, the image feature appearance information 800 of a map (the image feature A) of the road under elevated road indicates content of image feature appearance information of an image feature at the GPS position "O" 121 closest to an imaging position in the 3D environment map A 111 having the imaging position of image 521, within a predetermined distance from the imaging position "⊚" 120 of the processing target image 100 in FIG. 1. In the same manner as the image feature appearance information 700 in FIG. 7, a reference numeral 801 indicates an appearance distribution of an image feature over the image, a reference numeral 802 indicates a histogram of image luminance, the image feature, or a difference change amount of the image, and a reference numeral 803 indicates only the extracted appearance distribution of the image feature of the image.

In FIG. 9, the image feature appearance information 900 of a map (the image feature B) of the elevated road indicates content of image feature appearance information of an image feature at the GPS position "○" 122 closest to an imaging position in the 3D environment map B 112 having the imaging position of image 521, within a predetermined distance from the imaging position "⊚" 120 of the processing target image 100 in FIG. 1. In the same manner as the image feature appearance information 700 in FIG. 7 and the image feature appearance information 800 in FIG. 8, a reference numeral 901 indicates an appearance distribution of an image feature over the image, a reference numeral 902 indicates a histogram of image luminance, the image feature, or a difference change amount of the image, and a reference numeral 903 indicates only the extracted appearance distribution of the image feature of the image.

As described above, the map image feature comparison unit 213 selects the 3D environment map B 112 over the elevated road and the second 3D environment map A 111 under the elevated road, and specifies the creation image information 502 having the closest imaging position among those 2 maps. Then, in the specified 2 maps, the "image feature appearance information in image" 522 of the creation image information 502 is compared with already calculated image feature appearance information corresponding to the "image feature appearance information in image" 522 of the processing target image.

The map image feature comparison unit 213 compares the distributions 703, 803, and 903 or the histograms 702, 802, and 902, which are the image feature appearance information illustrated in FIGs. 7 to 9, and selects the 3D environment map A 111 having more similar image feature appearance information 522 among the 2 maps (the 3D environment map A 111 and the 3D environment map B 112). That is, the 3D environment map A111 with more appearances of the image feature or the difference change amount at the upper portion of distribution 803 is more similar to the distribution 703 than the 3D environment map B112 with less appearances of the image feature or the difference change at the upper portion of distribution 903.

In a case of determining the elevated road or the road under elevated road, more specifically, when appearances of the difference change amount, which is an appearance position change amount of the image feature or the image feature point, is small at the upper portion, the sky is open (the upper side is open) and there are few conspicuous image features, so that the road is estimated as the elevated road. On the other hand, when many image features appear in the upper portion, the elevated road exists on the upper side of the road under elevated road and many image features peculiar to an artificial object appear, and the road is estimated as the road under elevated road. Meanwhile, in the processing of the map image feature comparison unit 213, it is only desirable to know which 3D environment map is similar, and it is not desirable to determine whether the road is the road under elevated road or the elevated road.

The 3D environment map A 111, which is high on both sides in the histogram 802, is more similar to the histogram 702 than the 3D environment map B112, which is high only to the left in the histogram 902. Therefore, the 3D environment map A 111 is selected.

As a result, the map image feature comparison unit 213 may select a map created from the in-vehicle video having a similar image at an approximate actual coordinate position, that is, a map created from a video obtained by imaging a similar landscape at approximately the same location, and even when whether the 3D environment map A 111 and the 3D environment map B 112 are maps of roads under elevated road or elevated roads, or whether the video of the position and orientation target is a video of traveling on the road under elevated road or the elevated road is not known, it is possible to select the 3D environment map A 111 having a similar traveling environment, from the similarity of "image feature appearance information in image" 522.

In this manner, the image feature of the image information of the plurality of 3D environment maps 222 including a position of the moving object 203 or an imaging apparatus (the in-vehicle device 202) of the moving object 203 is compared with the image feature of the processing target image 100 acquired from the moving object 203 or the imaging apparatus (the in-vehicle device 202) of the moving object 203, and based on the comparison result, it is possible to specify a calculation environment map to be used for calculating the position and orientation of the moving object 203 or the imaging apparatus (the in-vehicle device 202) of the moving object 203, among the plurality of environment maps 222.

This calculation environment map may be the environment map 222 having the image feature appearance information 522 related to the image feature similar to the image feature of the image information acquired from the imaging apparatus (the in-vehicle device 202).

As illustrated in FIG. 1, it is possible to specify the 3D environment maps (111 and 112) having the image information of the second imaging positions (121 and 122) having a distance close to the first imaging position (120) of the image information acquired from the imaging apparatus (the in-vehicle device 202), and to compare the image feature of the image information of the first imaging position with the image feature of the image information of the second imaging position of the specified environment map.

It is possible to calculate a use priority of the specified calculation environment map, based on the similarity between the image feature of the image information acquired from the imaging apparatus (the in-vehicle device 202) and the image feature of the environment map.

The image feature may include at least one of
(1) list of image feature amount and position in image of image;
(2) image feature distribution of image;
(3) luminance distribution of image;
(4) list of position change amount in image and position in image of image feature of image; and
(5) distribution of position change amount in image of each pixel or pixel block of image, for example.

Further, each distribution of (2) image feature distribution of image, (3) luminance distribution of image, and (5) distribution of position change amount in image of each pixel or pixel block of image may be a histogram.

Note that, in order to speed up this selection in the map image feature comparison unit 213, an index related to the creation image information 502 in the 3D environment map DB 210 may be used in the same manner as speeding up a query of a general database. In general, a search speed may be improved by creating a separate table dedicated for search using elements related to search in the DB, so that index information for search using a part of the image feature appearance information 522 or the imaging position of image 521 may be prepared in advance by using a general known creation section for the index information of the DB. The index may be created, for example, by the map registration unit 212 as described above. Thus, it is possible to further speed up the comparison process in the map image feature comparison unit 213.

### (Contents of Map Acquisition Unit 214)

The map acquisition unit 214 specifies and acquires map data from the actual 3D environment map DB 210, for the 3D environment maps 222 selected by the map image feature comparison unit 213. Note that, the map image feature comparison unit 213 may specify the map data, and the map acquisition unit 214 may only acquire the specified map data. That is, the map data may be specified by either the map image feature comparison unit 213 or the map acquisition unit 214.

Unlike the method in the related art, since the data acquisition target is limited to the 3D environment maps 222 narrowed down to only roads considered to be the same road through the image feature comparison process of the map image feature comparison unit 213, instead of the 3D environment map selected only by the latitude and longitude, it is possible to acquire the 3D environment map 222 at a lower cost than the method in the related art.

When the plurality of 3D environment maps 222 are acquired, or the like, a priority set based on a similarity of the image feature appearance information 522, calculated by the map image feature comparison unit 213, may be held together with the acquired map data. Then, the position and orientation estimation unit 215 may perform the position and orientation estimation process with higher accuracy by performing calculation based on the acquired priority.

Specifically, in the server 201 illustrated in FIG. 3, the map acquisition unit 214 may realize the function by the CPU 301 executing the program stored in the memory 302 or by the network I/F 303, the recording medium I/F 304, or the like. Also, specifically, in the in-vehicle device 202 illustrated in FIG. 4, the function may be realized by the CPU 401 executing the program stored in the memory 402 or by the wireless communication apparatus 403 or the like, for example.

### (Contents of Position and Orientation Estimation Unit 215)

The position and orientation estimation unit 215 estimates an imaging position and orientation by using a method in the related art, for example, V-SLAM or the like, with data of the 3D environment map 222 acquired by the map acquisition unit 214 and data of the "in-vehicle moving image+GNSS information" 221b that is the position and orientation estimation target, and outputs the imaging position and orientation to the estimation position and orientation 223. Specifically, the position and orientation may be estimated by using a calculation method such as SLAM by reading the data of the selected and acquired 3D environment map 222, deploying the data in the memory, and comparing the data with a position of an image feature extracted from the in-vehicle moving image read in the same manner and deployed in the memory.

In this case, the map image feature comparison unit 213 may already extract the same image feature as the 3D image feature 501 of the 3D environment map 222 for any image of the in-vehicle video as the position and orientation estimation target, and may use the held information when the information is held.

Each 3D environment map 222 has a priority determined by the map image feature comparison unit 213. Therefore, even when there are a plurality of selected 3D environment maps 222, unlike the method in the related art in which there is no material to examine which map to use, by executing the position and orientation estimation process in descending order of priorities, it is possible to increase the possibility that the position and orientation estimation of the position and orientation estimation target may be completed by executing the position and orientation estimation process once.

The position and orientation may be estimated for a plurality of maps in the order of priority, and when position and orientation estimation succeeds, the position and orientation estimation may not be performed by using another map. Alternatively, the position and orientation estimation results of all the plurality of maps may be calculated and compared to obtain a final position and orientation estimation result. For example, the position and orientation estimation results of the respective 3D environment maps 222 may be compared, and one of the maps, for example, a map having a large number of image frames in a video on which the position and orientation estimation is performed, may be used as the final result.

A statistical process may be performed on the position and orientation estimation results for the plurality of maps in the same image frame, for example, averaging for obtaining the final result. Thus, it is possible to more accurately and reliably execute the position and orientation estimation process. At this time, the statistical process may be performed in which results of maps with higher priorities are emphasized by using the priorities as weights.

As a loop process of all the selected 3D environment maps 222, the processing of the map acquisition unit 214 and the processing of the position and orientation estimation unit 215 may be collectively executed for one map at a time. Thus, the acquisition cost of the 3D environment map 222 may be reduced up to a low cost.

Specifically, for example, in the server 201 illustrated in FIG. 3, the position and orientation estimation unit 214 may realize the function by the CPU 301 executing the program stored in the memory 302. Also, specifically, in the in-vehicle device 202 illustrated in FIG. 4, the function may be realized by the CPU 401 executing the program stored in the memory 402, for example.

### (Processing Procedure of Map Image Feature Comparison Unit 213, Map Acquisition Unit 214, and Position and Orientation Estimation Unit 215)

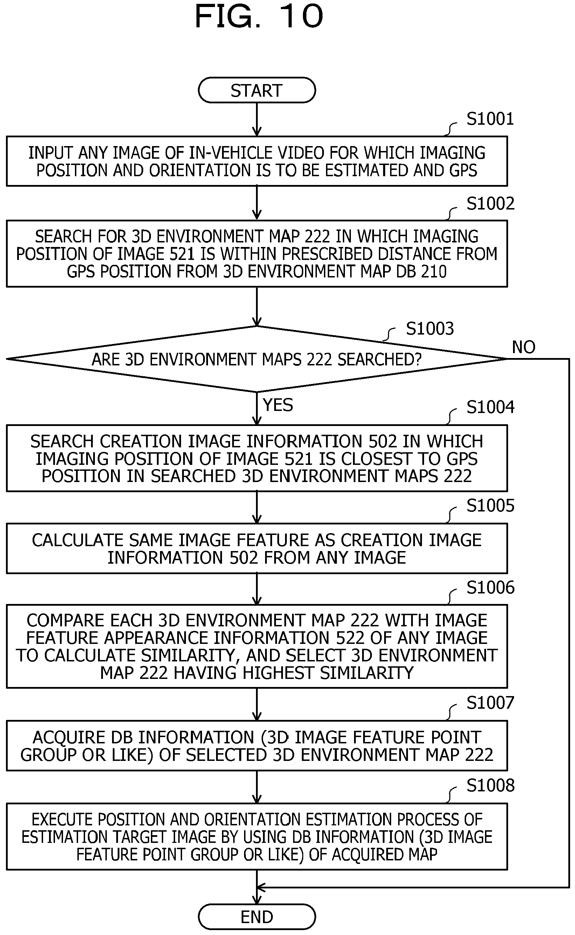

FIG. 10 is a flowchart illustrating an example of processing of a map image feature comparison unit, a map acquisition unit, and a position and orientation estimation unit according to Embodiment 1. In the flowchart in FIG. 10, any image of an in-vehicle video for which an imaging position and orientation is to be estimated, and GNSS (GPS) information are input (step S1001).

Next, the 3D environment map 222 in which the imaging position of image 521 is within a prescribed distance from a GPS position is searched from the 3D environment map DB 210 (step S1002). Then, it is determined whether or not the 3D environment maps 222 are searched (step S1003). Here, when the 3D environment maps 222 may not be searched (No in step S1003), a series of processes is ended without doing anything.

On the other hand, when the 3D environment maps 222 may be searched (Yes in step S1003), the creation image information 502, in which the imaging position of image 521 is closest to the GPS position, is searched among the searched 3D environment maps 222 (step S1004). Then, the same image feature as the creation image information 502 is calculated from the any image (step S1005).

Next, each of the 3D environment maps 222 is compared with the image feature appearance information 522 of the any image to calculate a similarity between each 3D environment map 222 and each image feature appearance information 522 of the any image. Then, the 3D environment map 222 having the highest similarity is selected (step S1006). The processing up to this point (each process in steps S1001 to S1006) may be performed, for example, by the map image feature comparison unit 213.

Then, DB information (a 3D image feature point group and the like) of the selected 3D environment map 222 is acquired (step S1007). The processing in step S1007 may be performed by, for example, the map acquisition unit 214.

Thereafter, the position and orientation estimation process on the estimation target image is executed by using the DB information (the 3D image feature point group and the like) of the acquired map (step S1008). The processing in step S1008, for example, may be performed by the position and orientation estimation unit 215.

As described above, according to Embodiment 1, the 3D environment map related to the in-vehicle data for which the imaging position and orientation is to be estimated is determined by whether or not the map is a 3D environment map in which the image feature appearance condition in the image at a time of creating a similar position (latitude and longitude) is similar, and the more similar map may be specified with the priority, so that it is possible to correctly select the 3D environment map of the route having the similar position, which may not be discriminated only by the latitude and longitude, such as the elevated road and the road under elevated road. Thus, it is possible to reduce a data acquisition cost of the undesirable 3D environment map, a position and orientation estimation execution cost, and a time until position and orientation estimation is completed, and to execute the position and orientation estimation in real-time.

In Embodiment 1, by storing the image feature appearance information (histogram, distribution, or the like of the image) 522 of the in-vehicle image used when creating the environment map in association with each 3D environment map 222 in advance, among the 3D environment maps 222 created from the in-vehicle video traveling on the roads having the same position but various heights as a vehicle of the position and orientation estimation target, it is possible to specify the 3D environment map by the in-vehicle image traveling on the road at the same height as the target vehicle by searching for the 3D environment map having image feature appearance information similar to the image captured by the target vehicle.

Therefore, since a correct map is specified from the 3D environment maps 222 having the same latitude and longitude position such as an elevated road, and a road under elevated road, the position and orientation may be reliably estimated, and the position and orientation estimation by the searched 3D environment maps 222 does not have to be repeated by trial and error. In particular, even for a road in the related art on which routes having a wrong 3D environment map are overlapped with each other, it is possible to correctly search a map of the road on which the moving object of the in-vehicle video travels, so that it is possible to obtain a position and orientation estimation result in real-time at a low cost without performing the position and orientation estimation with the wrong map.

Note that, in addition to the elevated road and the road under elevated road, it is also possible to use Embodiment 1 for specifying a 3D environment map between driving roads side by side (highway main line and side road to highway exit or the like), for which specifying mistakes are likely to occur (it is easy to confuse which one is running due to a GPS error of the GNSS information used together with the in-vehicle video of the position and orientation estimation target) only by a GPS latitude and longitude.

### (Embodiment 2)

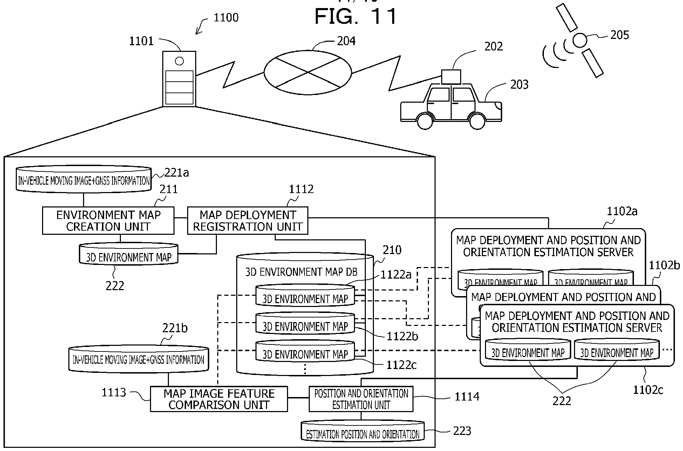

Next, Embodiment 2 will be described. In Embodiment 1, every time the position and orientation estimation process is performed, the position and orientation estimation unit 215 reads the selected and acquired 3D environment map 222, deploys the read 3D environment map into the memory, and performs the position and orientation estimation process by the calculation method such as SLAM. On the other hand, in Embodiment 2, as illustrated in FIG. 11, a map deployment and position and orientation estimation server 1102 (1102a, 1102b, 1102c, ...) is prepared that stores the 3D environment map 222 for map deployment that is deployed into the memory in advance.

Since the 3D environment map originally has a large data amount, it is difficult to execute the position and orientation estimation process in real-time when the 3D environment map is read and deployed every time the position and orientation estimation process is performed. Therefore, in Embodiment 2, the map deployment and position and orientation estimation server 1102 in which a 3D environment map is deployed in advance is prepared, instead of specifying, reading, and deploying the 3D environment map, every time in-vehicle data as a position and orientation estimation target and GNSS information are input.

Then, when specifying the 3D environment map, the map deployment and position and orientation estimation server 1102 in which the corresponding 3D environment map is deployed in advance is specified, and information desirable for the position and orientation estimation process is acquired by using the map deployment and position and orientation estimation server 1102. Thus, it is possible to execute the position and orientation estimation process without performing the process of acquiring the 3D environment map and then reading and deploying the 3D environment map in the server. In this manner, the position and orientation estimation may be realized in real-time.

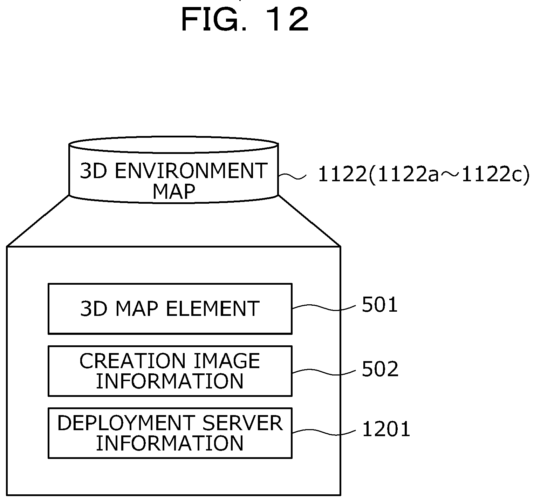

FIG. 11 is an explanatory diagram illustrating an example of a system configuration for implementing a position and orientation calculation method according to Embodiment 2. FIG. 12 is an explanatory diagram illustrating an example of a configuration of a 3D environment map according to Embodiment 2. In FIG. 11, a moving object position and orientation calculation system 1100 that realizes the position and orientation calculation method according to Embodiment 2 includes a server 1101 and the in-vehicle device 202 mounted on the moving object 203.

Note that, in the moving object position and orientation calculation system 1100 that implements the position and orientation calculation method according to Embodiment 2 illustrated in FIG. 11, the same components as those of the moving object position and orientation calculation system 200 that implements the position and orientation calculation method according to Embodiment 1 illustrated in FIG. 2 are denoted by the same reference numerals, and detailed description thereof will be omitted. In the same manner, in a 3D environment map 1122 according to Embodiment 2 illustrated in FIG. 12, the same components as those of the 3D environment map 222 illustrated in FIG. 5 are denoted by the same reference numerals, and the detailed description thereof will be omitted.

A map deployment registration unit 1112 registers the 3D environment map 222 created by the environment map creation unit 211 in the 3D environment map DB 210, reads and deploys the 3D environment map 222 into any processing server (the map deployment and position and orientation estimation server 1102 (1102a to 1102c)), and holds information (a deployment server information 1201 illustrated in FIG. 12) of the map deployment and position and orientation estimation server 1102 in the 3D environment map DB 210. Therefore, the 3D environment map 222 (1122a to 1122c) registered in the 3D environment map DB 210 includes the deployment server information 1201 in addition to the 3D map element 501 and the creation image information 502 in the 3D environment map 1122 illustrated in FIG. 5.

Note that, the deployment server information 1201 is not a part of the 3D environment map 1122, and may be held in another information and DB that may be referred from the 3D environment map 1122. That is, depending on implementation of data, the deployment server information 1201 may divide and hold the data in the other data and the DB. As described above, the deployment server information 1301 may be held so that the information processing apparatus (the map deployment and position and orientation estimation server 1202) in which the environment map is deployed into the memory may be easily specified.

In this manner, a plurality of environment maps may be deployed into the memory in advance in the map deployment and position and orientation estimation server 1102, which is another information processing apparatus that calculates the position and orientation of the imaging apparatus for any image information of the environment maps. It is possible to register the "deployment server information 1201" related to the information processing apparatus (the map deployment and position and orientation estimation server 1102) in which the environment map is deployed into the memory may be registered to the environment map 1122.

The map deployment and position and orientation estimation server 1102 (1102a to 1102c) is a processing server that performs the position and orientation estimation process such as SLAM. Any 3D environment map 222 designated in the map deployment registration unit 1112 is read in advance and deployed into the memory, in-vehicle data and GNSS information to be processed at any timing by a stream or any communication unit are acquired, and position and orientation estimation is calculated and output.

As a result, it is possible to the perform position and orientation estimation process in more real-time. The number of 3D environment maps 222 deployed into one map deployment and position and orientation estimation server 1102 is any number, and when the plurality of 3D environment maps 222 are deployed, position and orientation estimation using all the 3D environment maps 222 deployed at one time may be performed. Therefore, there is an advantage in that a processing time may be further shortened, in particular, in a case where position and orientation estimation on in-vehicle data of a driving route including a plurality of maps is performed, or the like.

In the same manner as the map image feature comparison unit 213 according to Embodiment 1, a map image feature comparison unit 1113 extracts information corresponding to the image feature appearance information in image 522 from any image of the in-vehicle video as a position and orientation estimation target, and searches for the 3D environment map 1122 having the imaging position of image 521 similar to the any image. Further, the image feature appearance information in image 522 of the creation image information 502 closest to the imaging position of image 521 in the searched 3D environment map 1122 is compared with the correspondence information of the any image to obtain a similarity.

Then, the 3D environment map 1122 is specified based on a level of the similarity. Further, the map deployment and position and orientation estimation server 1102 in which the specified 3D environment map 1122 is deployed is specified, from the deployment server information 1201 which is information on the map deployment and position and orientation estimation server 1102 included in the 3D environment map 1122.

In this manner, a plurality of environment maps are deployed into the memory in advance on the map deployment and position and orientation estimation server 1102, which is another information processing apparatus that calculates the position and orientation of the imaging apparatus of any image information of the environment map, and the deployment server information 1201 which is information on the specified map deployment and position and orientation estimation server 1102 is included and the 3D environment map 1122 (1122a to 1122c) is set, so that it is possible to specify the map deployment and position and orientation estimation server 1102 in which the specified calculation environment map is deployed in the memory.

The position and orientation estimation unit 1114 inputs the in-vehicle moving image and the GNSS information of the position and orientation estimation target to the specified map deployment and position and orientation estimation server 1102 to calculate a position and orientation, and outputs an estimation position and orientation 224. In this manner, the position and orientation result calculated by the specified map deployment and position and orientation estimation server 1102 may be acquired.

### (Processing Procedure of Environment Map Creation Unit 211 and Map Deployment Registration Unit 1112)

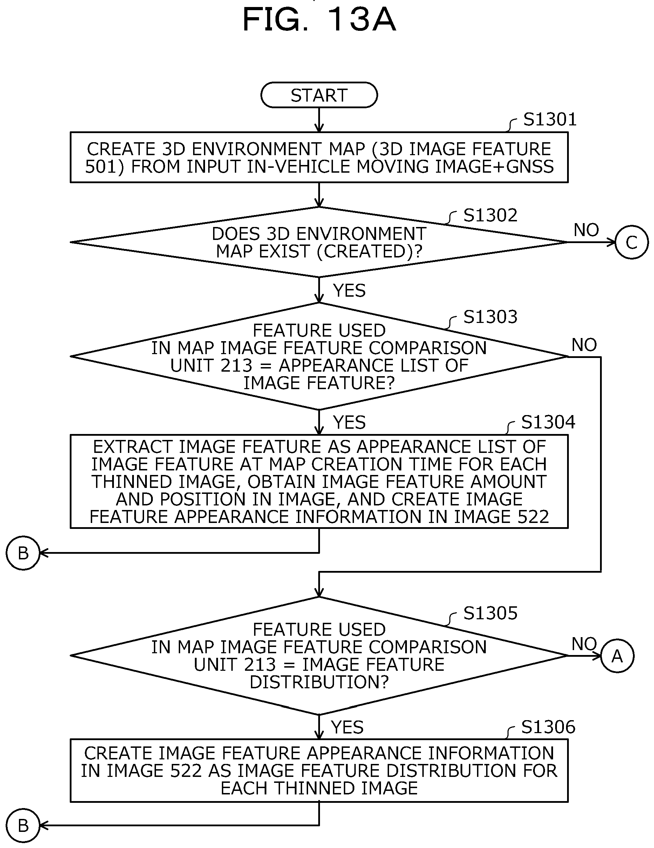

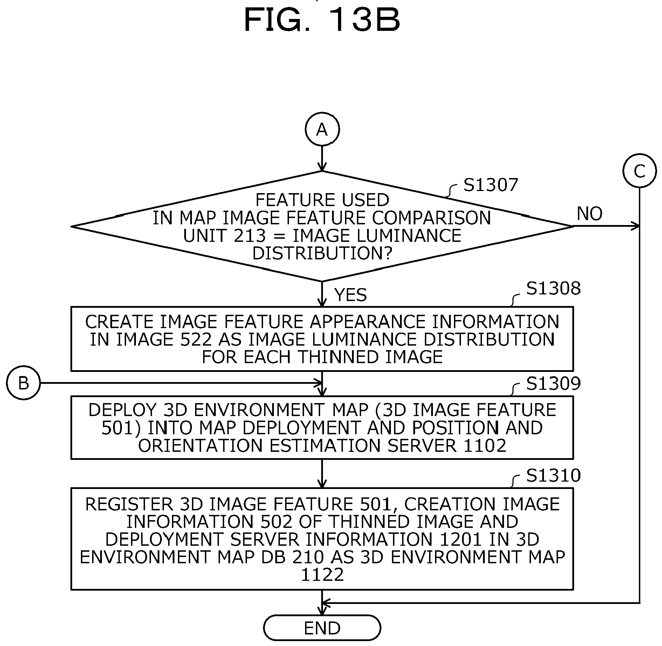

FIG. 13A to 13B are a flowchart illustrating an example of processing of an environment map creation unit and a map deployment registration unit according to Embodiment 2. In the flowchart in FIG. 13A to 13B, each process in steps S1301 to S1308 have the same contents as each process in steps S601 to S608 in the flowchart in FIG. 6. That is, the processing in steps S1301 to S1308 may be performed by the environment map creation unit 211.

After step S1308, the 3D environment map 222 (the 3D image feature 501) is deployed in the map deployment and position and orientation estimation server 1102 (step S1309). Then, the 3D image feature 501, the creation image information 502 of the thinned image (the imaging position 521 and the image feature appearance information 522), and the deployment server information 1201 are registered as the 3D environment map 1122 in the 3D environment map DB 210 (step S1310). Thus, a series of processes is ended. Each process in steps S1309 and S1310, for example, may be performed by the map deployment registration unit 1112.

### (Processing Procedure of Map Image Feature Comparison Unit and Position and Orientation Estimation Unit)

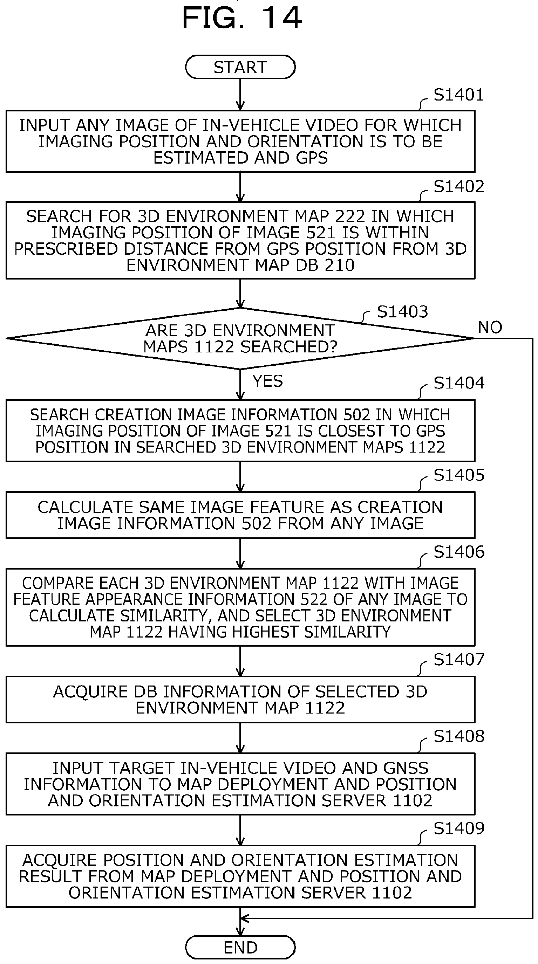

FIG. 14 is a flowchart illustrating an example of processing of a map image feature comparison unit and a position and orientation estimation unit according to Embodiment 2. In the flowchart in FIG. 14, each process in steps S1401 to S1406 have the same contents as each process in steps S1001 to S1006 in the flowchart in FIG. 10. That is, the processing in step S1401 to step S1406 may be performed by the map image feature comparison unit 1113.

After step S1406, the map image feature comparison unit 1113 acquires the deployment server information 1201, which is information of the map deployment and position and orientation estimation server 1102, as DB information of the selected 3D environment map 1122 (step S1407).

Thereafter, the target in-vehicle video (moving image) and the GNSS information are input to the map deployment and position and orientation estimation server 1102 (step S1408). Then, the position and orientation estimation result is acquired from the map deployment and position and orientation estimation server 1102 (step S1409). Thus, a series of processes is ended. Each process in steps S1408 and S1409 may be performed by the position and orientation estimation unit 1114, for example.

Note that, a system in which Embodiment 1 and Embodiment 2 are mixed may be used. That is, only some 3D environment maps such as 3D environment maps related to roads for which position and orientation estimation is highly desirable or for which real-time position and orientation estimation is more desirable are deployed in the map deployment and position and orientation estimation server 1102, and position and orientation estimation process is executed, as described in Embodiment 2. On the other hand, for other roads, for example, roads for which there is little request for position and orientation estimation or for which there is no request for real-time position and orientation estimation, the position and orientation estimation process may be executed by deploying the map at any time when the position and orientation estimation is desirable, as described in Embodiment 1.

For example, only important roads such as arterial roads on which a large number of vehicles travel are deployed in the map deployment and position and orientation estimation server 1102, so that it is possible to obtain a system that realizes as many position and orientation estimation requests as possible in real-time while reducing a server cost as much as possible.

As described above, according to Embodiment 2, the map deployment registration unit 1112 reads and deploys a map in the map deployment and position and orientation estimation server 1102 in advance. Then, the map may not be read and deployed at a timing of performing the position and orientation estimation process. Thus, it is possible to reduce a reading and deployment time that is a bottleneck of the processing in SLAM or the like. Therefore, the position and orientation estimation at a higher speed and in real-time may be realized.

Note that, the position and orientation calculation method described in the present embodiment may be achieved by causing a computer, such as a personal computer or a workstation, to execute a program prepared in advance. A program for distributing the foregoing programs is stored in a computer-readable recording medium, such as a hard disk, a flexible disk, a compact disc (CD)-ROM, a magneto-optical (MO) disk, a Digital Versatile Disc (DVD), or a Universal Serial Bus (USB) memory. The program for distributing the programs is read by the computer from the recording medium and executed by the computer. In addition, the position and orientation calculation program may be distributed via a network such as the Internet.

## Claims

1. A position and orientation calculation method comprising:
comparing a first image feature of first image information included in a plurality of environment maps with a second image feature of second image information acquired from a moving object or an imaging apparatus of the moving object; and
specifying a calculation environment map to be used for calculating a position and orientation of the moving object or the imaging apparatus of the moving object, among the plurality of environment maps, based on a result of the comparison.

2. The position and orientation calculation method according to claim 1, further comprising:
specifying an environment map which has the first image information obtained at a distance close to the photographing position of the second image information by the moving object or an imaging apparatus, from the plurality of environment maps..

3. The position and orientation calculation method according to claim 1 or 2, further comprising:
calculating a use priority of the specified calculation environment map, based on a similarity between the second image feature and the first image feature.

4. The position and orientation calculation method according to any one of claims 1 to 3, wherein
the first image feature and the second image feature includes at least one of:
a list of an image feature amount and a position in image of an image,
an image feature distribution or a histogram of the image,
a luminance distribution or a histogram of the image,
a list of a position change amount in image and a position in image of an image feature of the image, and
a distribution of a position change amount in image or a histogram of each pixel or a pixel block of the image.

5. The position and orientation calculation method according to any one of claims 1 to 4, further comprising:
deploying the plurality of environment maps into a memory in advance in information processing apparatus that calculates a position and orientation of an imaging apparatus of any image information of the environment maps, and
specifying the information processing apparatus in which the specified calculation environment map is deployed into the memory.

6. The position and orientation calculation method according to claim 5, further comprising:
registering information on the information processing apparatus in which the environment map is deployed into the memory, in the environment map.

7. The position and orientation calculation method according to claim 5 or 6, further comprising:
acquiring a position and orientation result calculated by the specified information processing apparatus.

8. The position and orientation calculation method according to any one of claims 1 to 7, wherein
searching the plurality of environment maps by using a search index which is created for image feature appearance information of the environment map.

9. A position and orientation calculation program in which a computer performs processing of:
comparing a first image feature of first image information included in a plurality of environment maps with a second image feature of second image information acquired from a moving object or an imaging apparatus of the moving object; and
specifying a calculation environment map to be used for calculating a position and orientation of the moving object or the imaging apparatus of the moving object, among the plurality of environment maps, based on a result of the comparison.

10. An information processing apparatus comprising:
a map image feature comparison unit configured to compare a first image feature of first image information included in a plurality of environment maps with a second image feature of second image information acquired from a moving object or an imaging apparatus of the moving object; and
a map acquisition unit configured to specify a calculation environment map to be used for calculating a position and orientation of the moving object or the imaging apparatus of the moving object, among the plurality of environment maps, based on a result of the comparison.

11. The information processing apparatus according to claim 10, further comprising
a position and orientation estimation unit configured to estimate a position and orientation of the moving object or the imaging apparatus by using the calculation environment map.
